# EUROPEAN PATENT APPLICATION

(11) **EP 4 696 900 A1**
(43) Date of publication of application: **18.02.2026**
(21) Application number: 23933118.4
(22) Date of filing: 19.12.2023
(51) Int. Cl.: F16C 33/78, F16C 19/38, F16J 15/3256, F16C 33/80, F16J 15/3232

(54) **AXLE BEARING FOR RAILWAY VEHICLE**

(30) Priority: 12.04.2023 JP 2023065069
(71) Applicant: NSK Ltd., Tokyo 141-8560 (JP)
(72) Inventor: KURITA Shuhei, Fujisawa-shi Kanagawa 2518501 (JP); HORII Yoji, Fujisawa-shi Kanagawa 2518501 (JP); NIWA Misaki, Fujisawa-shi Kanagawa 2518501 (JP)
(74) Representative: Grünecker Patent- und Rechtsanwälte PartG mbB
(86) International application number: PCT/JP2023/045468
(87) International publication number: WO 2024/214344

(57) **Abstract**

A double-row tapered roller bearing (20), which has an outer ring (21), an inner ring (23), and a plurality of tapered rollers (22) rollably disposed between the outer ring (21) and the inner ring (23), and rotatably supports an axle (50) of a railway vehicle, is provided with: an outer seal member (30) which has an outer cylindrical part (31) attached to an inner diameter part (21b) of the outer ring (21), and a standing plate part (32) extending radially inward from the outer end in the width direction of the outer cylindrical part (31); a small-diameter step part (26) formed in an outer diameter part (25) of the inner ring (23) adjacent to an inner diameter end (32a) of the standing plate part (32); and an elastic body (35) which is fixed to the inner diameter end (32a) of the standing plate part (32) and opposes an outer periphery of the small-diameter step part (26). The inner diameter end (32a) of the standing plate part (32) adjacent to the outer periphery of the small-diameter step part (26) opposes a side wall surface (26b) between the outer diameter part (25) of the inner ring (23) and the small-diameter step part (26) in the axle direction.

## Description

### TECHNICAL FIELD

The present invention relates to an axle bearing for railway vehicle that rotatably supports an axle of a railway vehicle.

### BACKGROUND ART

In general, a bearing unit for railway vehicle is attached to an end of an axle of a railway vehicle to rotatably support the axle and support weight of the vehicle.

This type of bearing unit for railway vehicle generally includes a double row tapered roller bearing (hereinafter, also simply referred to as a "bearing") which is an example of an axle bearing for railway vehicle, and the axle of the railway vehicle is supported by this bearing. The bearing includes a single outer ring and two inner rings individually segmented per row, and a plurality of tapered rollers held by a cage are rollably arranged between a raceway surface of the outer ring and double-row raceway surfaces of the inner rings. Sealing devices (also referred to as "seals") are disposed on both axial end sides of the bearing.

In the related art, bearings used in a bogie of the railway vehicle are important components, and thus are disassembled and inspected at the time of a periodic inspection of the vehicle, and a bearing having no abnormality is assembled again and continuously used. Due to an influence of a decline in the productive labor force in recent years, there is a demand to extend a periodic inspection interval and reduce maintenance of the railway vehicle. In addition, from a viewpoint of environmental contribution such as CO₂ reduction, an axle bearing for railway vehicle (hereinafter, also simply referred to as an "axle bearing" or a "bearing for railway vehicle") is required to improve reliability, extend service life, reduce weight, and reduce space. Therefore, in a future axle bearing, an improvement in maintainability accompanied by bearing disassembly, reduced weight, and reduced space are added while withstanding a high load and maintaining long-term lubricity.

The axle bearing that supports a wheelset (wheel and axle) of the railway vehicle has a function of supporting the weight of the vehicle and rotating the wheel, and a high load is applied to the axle bearing together with vibration during traveling. Therefore, in the axle bearing, a structure with a sealing device for sealing grease inside the bearing and holding the grease is often used.

Patent Literature 1 discloses a sealing device in which a notch for inserting a disassembly tool is provided on an outer diameter portion of a seal case in order to improve disassembly. In this sealing device, a contact seal is formed between a seal member fixed to both axial ends of an outer ring and an oil thrower disposed on both axial sides of an inner ring, and a width in an axial direction is large.

Further, Patent Literature 2 discloses a bearing device for railway vehicle in which a step portion, into which a seal member can be dropped, is provided on an outer peripheral surface of an inner ring extending portion in which an inner ring extends in a width direction more than an outer ring, and a seal member can be easily disassembled. The bearing device for railway vehicle has a configuration in which a width of the inner ring, from which the inner ring extending portion with which the seal member is in slidable contact extends, is larger than a width of the outer ring, and the width is large in the axial direction.

Patent Literature 3 discloses a double row tapered roller bearing in which a seal is mounted in an opening of an annular space formed between an outer ring and an inner ring, the seal including a seal plate in which a seal member is integrally joined to a core metal fitted onto an inner periphery of an end of the outer ring and a slinger fitted onto an outer diameter of the inner ring. This seal has a compact assembly width, but has a large number of components.

In addition, Patent Literature 4 discloses a sealing device in which a guide portion for guiding pulling performed by a hand or a jig is provided on a rigid portion of an outer seal member. This sealing device has a structure in which an assembly width is compact, but a seal shape is complicated, and therefore, a width of an inner ring is larger than a width of an outer ring, and a width in an axial direction is large.

Further, the bearing for railway vehicle is lubricated with the grease or oil, and as a method of maintaining the function of the lubricating oil and maintaining a relatively good lubrication environment, there is a method of using an appropriate lubricating oil together with an appropriate sealing structure.

As a lubricating oil used for the bearing, for example, Patent Literature 5 discloses a bearing for railway vehicle in which a specific water-resistant grease is sealed around a rolling element. According to the bearing described in Patent Literature 5, even when water gets into the bearing, it is possible to prevent an action of moisture that inhibits oil film formation, prevent metal contact on a rolling contact surface, and prevent early flaking.

Patent Literature 6 proposes an axle device for railway vehicle in which a cover member is fixed to an outer peripheral surface of a rear lid. According to the above-described axle device described in Patent Literature 6, it is possible to prevent water from entering the inside of a rolling bearing and to prevent rust and flaking of the bearing.

Further, Patent Literature 7 describes an axle bearing unit for railway vehicle in which a rear lid is divided into two divided rear lids arranged in an axial direction, and a lubricant accommodating recess is provided at a specific position. According to the above-described bearing unit described in Patent Literature 7, fretting wear at an end surface portion of an inner ring of a bearing can be reduced, and an amount of lubricant sealed can be increased, so that a lubricating effect can be obtained for a long period of time.

The above-described bearings described in Patent Literatures 5 to 7 can maintain a relatively good lubrication environment by retaining the lubricant inside the bearing for a long period of time, and can prevent flaking of a material inside the bearing. However, in order to use the bearing for a long period of time in the future, it is also necessary to improve reliability of the material.

The axle bearing that supports the wheelset (wheel and axle) of the railway vehicle has a function of supporting the weight of the vehicle and rotating the wheel, and a high load is applied to the axle bearing together with vibration during traveling. Therefore, what is most concerned as damage to the axle bearing is flaking at a portion where respective components of an outer ring, an inner ring, and a rolling element (roller) constituting the bearing are in rolling contact with each other. There are various factors for the occurrence of flaking of the bearing, but in a bearing for railway vehicle used under a relatively good lubrication environment, internally initiated fatigue is a factor for the flaking. Therefore, in order to prevent the flaking, it is important that materials of the inner ring, the outer ring, and the rolling element have a high degree of cleanliness.

In an axle bearing for railway vehicle in the related art, carburized bearing steel (case-hardened steel) such as SNCM420 specified in JIS G 4052 has been often used. In addition, in recent years, with the progress of steel making methods, a quality improvement in material cleanliness of high carbon chromium bearing steels such as SUJ2 specified in JIS G 4805 has been recognized.

Further, as a technique in the related art for the material inside the bearing, for example, Patent Literature 8 proposes a rolling bearing in which an inner ring is made of high carbon chromium bearing steel, a specific carburized layer or carbonitrided layer is formed on a raceway surface, and hardness of a core portion and an average amount of retained austenite are defined. According to the above-described rolling bearing described in Patent Literature 8, excellent dimensional stability can be obtained, damage is less likely to occur even when a high fitting stress is applied, and service life can be extended.

Patent Literature 7 also describes a material, and inner and outer rings of the bearing in the bearing unit are made of bearing steel or carburized steel.

### CITATION LIST

### PATENT LITERATURE

Patent Literature 1: JP2009-210018A
Patent Literature 2: JP4260935B
Patent Literature 3: JP4731508B
Patent Literature 4: WO2019/74042
Patent Literature 5: JP4751808B
Patent Literature 6: JP2016-8700A
Patent Literature 7: JP2001-301617A
Patent Literature 8: JP2006-71022A

### SUMMARY OF INVENTION

### TECHNICAL PROBLEM

However, in the above-described sealing device of Patent Literature 1, in order to implement compactness, it is difficult to make a width of the outer diameter portion of the seal case equal to or less than a width of the outer ring or a width of the inner ring. Further, in the bearing device for railway vehicle of Patent Literature 2, a width of a seal outer ring of the seal member is larger than a width of the inner ring, and compactness is not considered.

Further, in the double row tapered roller bearing of Patent Literature 3, disassembly is not considered, and there is no portion into which a disassembly tool is inserted at the time of seal disassembly, and it is also difficult to disassemble the seal simultaneously with the inner ring. In addition, in the sealing device of Patent Literature 4, since the guide portion (a recess, a protrusion, a screw hole, or the like) for inserting the disassembly tool is provided, which results in a problem that a shape of the disassembly tool is complicated and is subjected to dimensional restrictions.

Therefore, the axle bearing having the sealing device as described above cannot sufficiently meet future needs of improving maintainability, reducing weight, and reducing space while having a bearing function in the related art.

The present invention has been made in view of the above-described problems, and an object of the present invention is to provide an axle bearing for railway vehicle that can improve reliability, extend service life, improve maintainability, reduce weight, and reduce space.

### SOLUTION TO PROBLEM

The above object of the present invention is implemented by the following configuration.

An axle bearing for railway vehicle including an outer ring, an inner ring, and a plurality of rolling elements rollably arranged between the outer ring and the inner ring, and rotatably supporting an axle having an end to which a wheel of a railway vehicle is attached, the axle bearing for railway vehicle including:
an outer seal member including an outer cylindrical portion attached to an inner diameter portion of the outer ring and a standing plate portion extending radially inward from an outer end in a width direction of the outer cylindrical portion;
a multi-stage small-diameter step portion formed on an outer diameter portion of the inner ring adjacent to an inner diameter end of the standing plate portion; and
an elastic body fixed to the inner diameter end of the standing plate portion and facing an outer periphery of the small-diameter step portion, in which
the inner diameter end of the standing plate portion adjacent to the outer periphery of the small-diameter step portion faces, in an axle direction, a side wall surface between the outer diameter portion and the small-diameter step portion of the inner ring.

### ADVANTAGEOUS EFFECTS OF INVENTION

According to the axle bearing for railway vehicle of the present invention, it is possible to improve the reliability, extend the service life, improve the maintainability, reduce the weight, and reduce the space.

### BRIEF DESCRIPTION OF DRAWINGS

[Fig. 1] Fig. 1 is a schematic cross-sectional view illustrating a bearing unit for railway vehicle including an axle bearing for railway vehicle according to a first embodiment of the present invention.
[Fig. 2] Fig. 2 is an enlarged schematic cross-sectional view of a portion A in Fig. 1.
[Fig. 3] Fig. 3 is a schematic cross-sectional view illustrating a procedure of disassembling the axle bearing for railway vehicle illustrated in Fig. 1.
[Fig. 4] Fig. 4 is a schematic cross-sectional view illustrating a bearing unit for railway vehicle including an axle bearing for railway vehicle according to a second embodiment of the present invention.
[Fig. 5] Fig. 5 is an enlarged schematic cross-sectional view of a portion B in Fig. 4.

### DESCRIPTION OF EMBODIMENTS

Hereinafter, an axle bearing for railway vehicle according to an embodiment of the present invention will be described in detail with reference to the drawings.

### (First Embodiment)

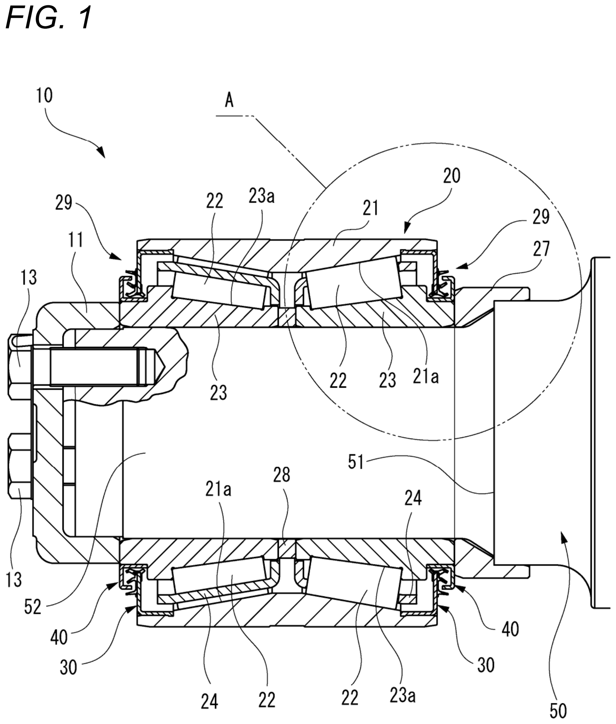

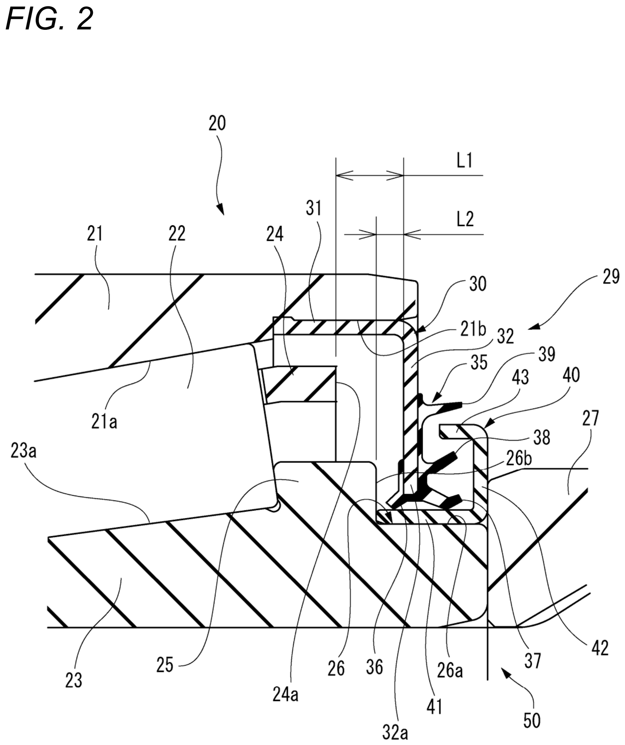

Fig. 1 is a schematic cross-sectional view illustrating a bearing unit for railway vehicle 10 including a bearing for railway vehicle according to a first embodiment of the present invention. Fig. 2 is an enlarged schematic cross-sectional view of a portion A in Fig. 1.

As illustrated in Fig. 1, the bearing unit for railway vehicle 10 according to the first embodiment includes a double row tapered roller bearing 20 as an axle bearing for railway vehicle, and an axle 50 of a railway vehicle is rotatably supported by the double row tapered roller bearing 20. In addition, a wheel (not illustrated) of the railway vehicle is attached to an outer end (that is, a portion having a larger shaft diameter in Fig. 1) of the axle 50.

The double row tapered roller bearing 20 includes a single outer ring 21, two inner rings 23, 23 individually segmented per row, a plurality of tapered rollers (rolling elements) 22 rollably arranged between a raceway surface of the outer ring 21 and double-row raceway surfaces of the inner rings 23, 23, a cage 24 that holds the plurality of tapered rollers 22, and an inner ring spacer 28 disposed between the inner rings 23, 23 to adjust a bearing clearance. A grease supply port (not illustrated) for sealing grease (lubricant) in a bearing space is formed at an appropriate position in an axial central portion of the outer ring 21.

On both axial end sides of the inner rings 23, 23, a front lid 11 and a rear lid 27 are disposed around the axle 50 to abut on respective axial end surfaces of the inner rings 23. The inner ring 23, 23 and the rear lid 27 are sandwiched between an outer peripheral surface step portion 51 of the axle 50 and the front lid 11, and are fixed by bolts 13 from a shaft end 52 side of the axle 50.

Further, the outer ring 21 is positioned in an axial direction by being fixed to a housing (not illustrated).

In the first embodiment, high carbon chromium bearing steel is used as a material of the outer ring 21, and carburized bearing steel is used as the material of the inner rings 23, 23. Examples of the high carbon chromium bearing steel include SUJ2, SUJ3, and SUJ5 described in JIS G 4805 and 52100 described in SAE J 404. Examples of the carburized bearing steel include SCr415, SCr420, SCM420, SNCM220, and SNCM815 described in JIS G 4053, and 5120, 8620, and 4320 described in SAE J 404.

Further, sealing devices 29, 29 are provided on both sides of the double row tapered roller bearing 20 according to the first embodiment, that is, at axial ends of the axle 50, respectively, and the sealing devices 29, 29 prevent foreign matters from entering the double row tapered roller bearing 20 and prevent the lubricant (grease) from leaking from the inside of the bearing.

As illustrated in Fig. 2, the sealing device 29 includes an outer seal member 30 attached to the outer ring 21, a single-stage small-diameter step portion 26 formed on an outer diameter portion (large flange) 25 of the inner ring 23 adjacent to an inner diameter portion of the outer seal member 30, and an inner seal member 40 fixed to the small-diameter step portion 26. The small-diameter step portion 26 is formed on the outer diameter portion 25 of the inner ring 23 on an end side in a width direction (right side in Fig. 2) with respect to an inner ring raceway surface 23a.

The outer seal member 30 is made of a metal material and has an L-shaped cross section including an outer cylindrical portion 31 attached to an inner diameter portion 21b on the end side in the width direction with respect to an outer ring raceway surface 21a of the outer ring 21 and a standing plate portion 32 extending radially inward from an outer end in the width direction of the outer cylindrical portion 31. An inner diameter end 32a of the standing plate portion 32 faces, in an axle direction (left-right direction in Fig. 2), a side wall surface 26b between the outer diameter portion 25 and the small-diameter step portion 26 of the inner ring 23.

Therefore, the outer seal member 30 formed to have the L-shaped cross section has a simple and compact shape in which the standing plate portion 32 extending radially inward from the outer end in the width direction of the outer cylindrical portion 31 attached to an inner peripheral surface of the inner diameter portion 21b of the outer ring 21 does not protrude from an outer ring end surface of the outer ring 21.

An elastic body 35 facing an outer periphery of the small-diameter step portion 26 of the inner ring 23 is integrally provided and fixed to the inner diameter end 32a of the outer seal member 30. The elastic body 35 forms the inner diameter portion of the outer seal member 30 together with the inner diameter end 32a of the standing plate portion 32.

The elastic body 35 made of an elastic sealing material such as rubber or elastomer integrally includes a first lip 36 and a second lip 37 serving as lip portions that are in slidable contact with the inner seal member 40 fixed to the small-diameter step portion 26, and a third lip 38 and a fourth lip 39.

The inner seal member 40 is formed to have a U-shaped cross section including an inner sleeve 41 press-fitted into the small-diameter step portion 26 of the inner ring 23, a flange 42 extending radially outward from an outer end in the width direction of the inner sleeve 41, and an outer sleeve 43 extending to an inner side of the bearing from an inner diameter end of the flange 42.

The first lip 36 of the elastic body 35 is in slidable contact with an outer peripheral surface of the inner sleeve 41 of the inner seal member 40 over an entire circumference, and has a function of mainly preventing or reducing leakage of the grease from the inside of the bearing to the atmosphere.

The second lip 37 of the elastic body 35 is in slidable contact with the outer peripheral surface of the inner sleeve 41 of the inner seal member 40 over the entire circumference, and has a function of mainly preventing or reducing entry of foreign matters from the atmosphere into the inside of the bearing.

By providing, on an outer peripheral surface 26a of the small-diameter step portion 26 of the inner ring 23, the inner seal member 40 with which the elastic body 35 can come into slidable contact, the outer peripheral surface 26a of the small-diameter step portion 26 is prevented from being worn by the elastic body 35 coming into slidable contact with the inner seal member 40. When a sealing function deteriorates, initial sealing performance can be restored by replacing only the inner seal member 40.

The third lip 38 and the fourth lip 39 of the elastic body 35 are disposed to sandwich the outer sleeve 43 of the inner seal member 40 in a radial direction, and forms a labyrinth seal.

Further, as illustrated in Fig. 2, the double row tapered roller bearing 20 according to the first embodiment is configured such that an axial relative distance L1 between an outer surface 24a of the cage 24 that rotatably holds the plurality of tapered rollers 22 and the standing plate portion 32 of the outer seal member 30 is larger than an axial relative distance L2 between the side wall surface 26b, which is between the outer diameter portion 25 and the small-diameter step portion 26 of the inner ring 23, and the standing plate portion 32 of the outer seal member 30.

In this way, according to the above-described double row tapered roller bearing 20 according to the first embodiment, when disassembling the sealing device 29, the side wall surface 26b of the inner ring 23, which is moved in the axial direction with respect to the outer ring 21, presses the inner diameter end 32a of the outer seal member 30, so that the outer seal member 30 can be separated from the outer ring 21. That is, by adopting a structure in which the inner ring 23 directly presses the outer seal member 30 of the sealing device 29, disassembly of the sealing device 29 can be improved. As a result, maintainability of the double row tapered roller bearing 20 is improved.

Here, an example of a method for disassembling the double row tapered roller bearing 20 will be described.

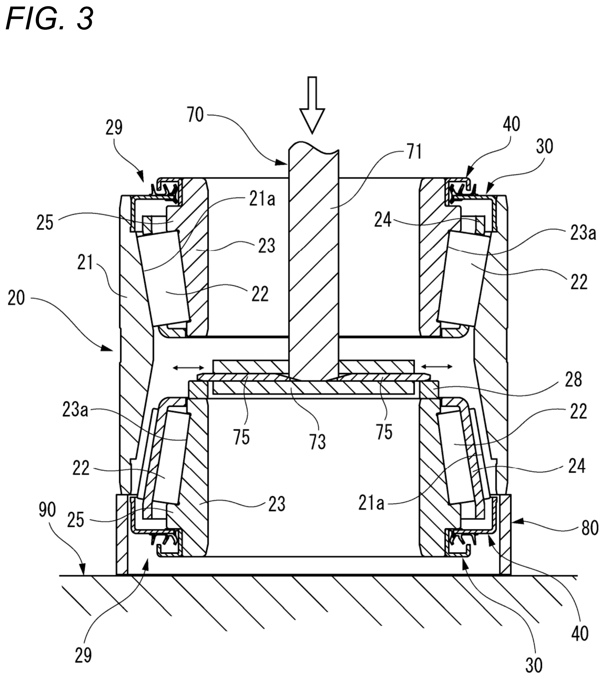

Fig. 3 is a schematic cross-sectional view illustrating a procedure of disassembling the double row tapered roller bearing 20 illustrated in Fig. 1.

As illustrated in Fig. 3, for example, when the sealing device 29 of the double row tapered roller bearing 20 is disassembled, first, the double row tapered roller bearing 20 is placed on a jig stand 80 placed on a work table 90 such that one axial end of the double row tapered roller bearing 20 faces downward. The jig stand 80 is formed in an annular shape that has an outer diameter slightly larger than an outer diameter of the outer ring 21 and has an inner diameter slightly larger than an inner diameter of the inner diameter portion 21b of the outer ring 21.

A disassembly tool 70 includes a drive shaft 71 that is driven up and down, a disk-shaped tool body 73 attached to a lower end of the drive shaft 71, and a plurality of pressing pieces 75 that are housed in the tool body 73 and whose tips are capable of protruding and retracting radially from an outer peripheral surface of the tool body 73.

The tool body 73 has an outer diameter slightly smaller than an inner diameter of the inner ring 23. Therefore, in a state where the tips of the plurality of pressing pieces 75 are all retracted in the tool body 73, the tool body 73 can be inserted through the inner ring 23. Further, in a state where the tips of the plurality of pressing pieces 75 radially protrude from the outer peripheral surface of the tool body 73, the tips of the pressing pieces 75 abut on an axial end of the inner ring 23, and the tool body 73 cannot be inserted through the inner ring 23.

Then, the double row tapered roller bearing 20 is placed on the jig stand 80 such that one axial end of the outer ring 21 faces an upper end edge of the jig stand 80. At this time, in the double row tapered roller bearing 20 placed on the jig stand 80, the two inner rings 23, 23 are spaced apart from each other in the axial direction in advance such that the pressing pieces 75 of the disassembly tool 70 can be inserted between the two inner rings 23, 23.

Next, the drive shaft 71 of the disassembly tool 70 is driven downward, and the tool body 73 in the state where the tips of the plurality of pressing pieces 75 are all retracted in the tool body 73 is inserted through the inner ring 23 on an upper side. As illustrated in Fig. 3, the tips of the plurality of pressing pieces 75 radially protrude from the outer peripheral surface of the tool body 73 penetrating the upper inner ring 23 and are disposed between the two inner rings 23, 23. Therefore, the tips of the plurality of pressing pieces 75 of the disassembly tool 70 can abut on the inner ring spacer 28 to press the axial end of the lower inner ring 23 downward.

When the drive shaft 71 of the disassembly tool 70 is further driven downward, the side wall surface 26b of the lower inner ring 23 that is moved downward with respect to the outer ring 21 supported by the jig stand 80 presses the inner diameter end 32a of the outer seal member 30 downward, so that the outer seal member 30 can be separated from the outer ring 21.

At this time, as described above, since the axial relative distance L1 between the cage 24 and the outer seal member 30 is larger than the axial relative distance L2 between the inner ring 23 and the outer seal member 30, when the lower inner ring 23 is moved downward in the axial direction with respect to the outer ring 21, the outer seal member 30 does not come into contact with the cage 24 inside the bearing before the side wall surface 26b of the inner ring 23 comes into contact with the cage 24 inside the bearing.

That is, when the lower inner ring 23 is moved downward in the axial direction with respect to the outer ring 21, there is no concern that the outer seal member 30 and the cage 24 come into contact with each other, causing the cage 24 to be damaged or deformed, and thus making it impossible to continue using the double row tapered roller bearing 20. In particular, regarding a cage that uses a resin material, contact with the outer seal member 30 must be avoided, and therefore, a configuration of the double row tapered roller bearing 20 according to the first embodiment is effective.

Further, the outer seal member 30 and the inner seal member 40 constituting the sealing device 29, and the inner ring 23 according to the first embodiment may be configured to have simple shapes having the same circumferential cross section. Further, as compared with a structure in the related art, the sealing device 29 of the double row tapered roller bearing 20 has a simple and compact shape, making it possible to reduce space required for the housing that fixes the outer ring 21 and to omit a component constituting the sealing device 29. Therefore, a weight of the bearing unit for railway vehicle 10 may be reduced.

As described above, according to the double row tapered roller bearing 20 according to the first embodiment, it is possible to improve reliability, extend service life, improve maintainability, reduce weight, and reduce space.

Further, in the double row tapered roller bearing 20 according to the first embodiment configured as described above, the outer ring 21 and the inner rings 23, 23 are made of different materials. Effects of such a configuration will be described in detail below.

In general, the axle bearing is used in a state where the inside of the bearing is not pressurized but has a gap. Therefore, flaking is most likely to occur on the outer ring raceway surface. In the first embodiment, since the outer ring 21 is made of the high carbon chromium bearing steel that is a material having a high degree of cleanliness, it is possible to obtain a high effect of preventing occurrence of internally initiated flaking.

In general, inner diameter surfaces of the inner rings 23, 23 and an outer diameter surface of the axle 50 are in contact with each other with a sufficient interference. When the interference is insufficient to support weight of a heavy vehicle, creep occurs in the inner rings 23, 23, and therefore, it is important to set the interference to be large in order to prevent the occurrence of the creep. In the first embodiment, the inner rings 23, 23 is made of the carburized bearing steel, and compressive stress is generated in a surface layer portion of the carburized bearing steel by carburizing heat treatment. Therefore, by using the carburized bearing steel having the compressive stress in the radial direction of the axle 50 as the material of the inner ring 23, 23, it is possible to set a high allowable value of the interference.

In this way, according to the double row tapered roller bearing 20 according to the first embodiment, it is possible to prevent the flaking inside the bearing and to obtain high reliability over a long period of time.

As described above, when a material inside the bearing is appropriately selected while maintaining a relatively good lubrication environment, the bearing can be used with high reliability over a long period of time. In the first embodiment, since the double row tapered roller bearing 20 includes the sealing devices 29, 29 mounted on both axial ends thereof, it is possible to prevent foreign matters from entering the inside of the double row tapered roller bearing 20 and prevent the lubricant from leaking from the inside of the double row tapered roller bearing 20, and it is possible to maintain a good lubrication environment. As a result, operational reliability of the bearing can be further improved, and the service life of the bearing can be extended.

### (Second Embodiment)

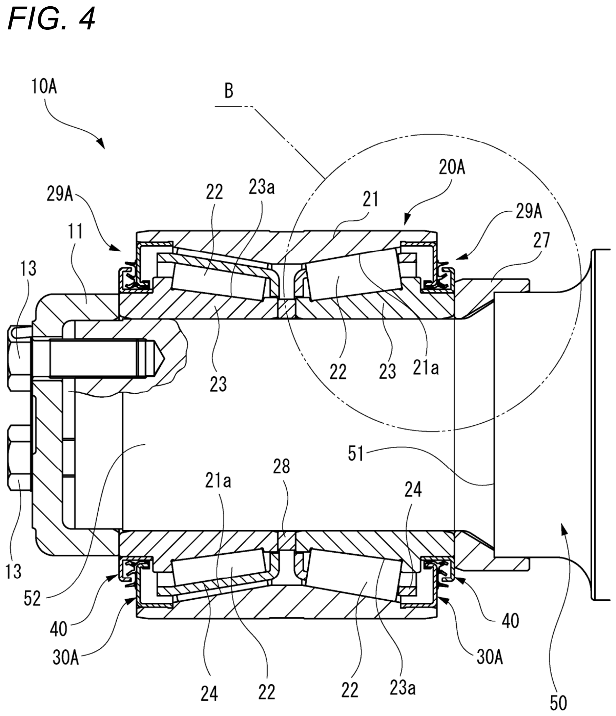

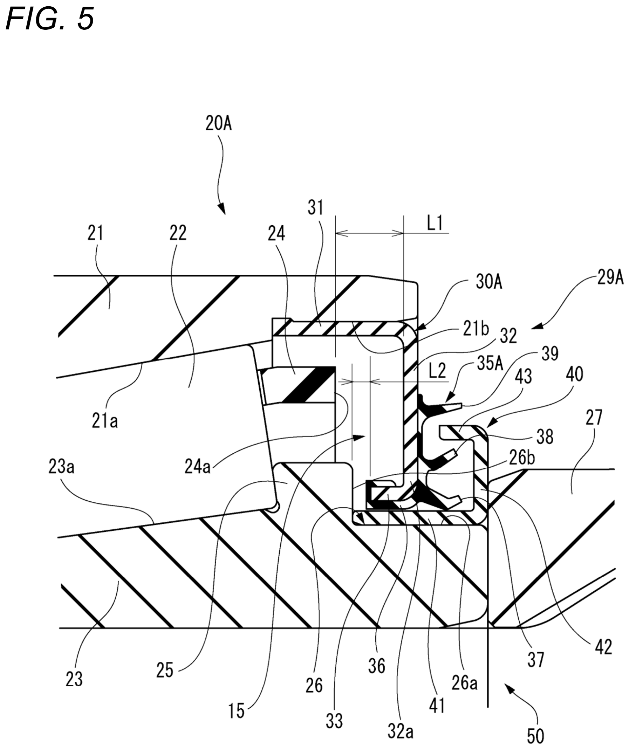

Fig. 4 is a schematic cross-sectional view illustrating a bearing unit for railway vehicle 10A including a bearing for railway vehicle according to a second embodiment of the present invention. Fig. 5 is an enlarged schematic cross-sectional view of a portion B in Fig. 4. In a double row tapered roller bearing 20A as the bearing for railway vehicle according to the second embodiment, the same components as those of the double row tapered roller bearing 20 according to the first embodiment are denoted by the same reference numerals, and detailed description thereof will be omitted.

As illustrated in Fig. 4, the bearing unit for railway vehicle 10A according to the second embodiment includes the double row tapered roller bearing 20A as an axle bearing for railway vehicle, and the axle 50 of a railway vehicle is rotatably supported by the double row tapered roller bearing 20A.

Sealing devices 29A, 29A are provided on both sides of the double row tapered roller bearing 20A according to the second embodiment, respectively, and the sealing devices 29A, 29A prevent foreign matters from entering the double row tapered roller bearing 20A and prevent grease from leaking from the inside of the bearing.

As illustrated in Fig. 5, the sealing device 29A includes an outer seal member 30A attached to the outer ring 21, the single-stage small-diameter step portion 26 formed on the outer diameter portion (large flange) 25 of the inner ring 23 adjacent to an inner diameter portion of the outer seal member 30A, and the inner seal member 40 fixed to the small-diameter step portion 26. The small-diameter step portion 26 is formed on the outer diameter portion 25 of the inner ring 23 on an end side in a width direction (right side in Fig. 5) with respect to an inner ring raceway surface 23a.

The outer seal member 30A is made of a metal material and is formed in an U-shaped cross section including the outer cylindrical portion 31 attached to the inner diameter portion 21b on the end side in the width direction with respect to the outer ring raceway surface 21a of the outer ring 21, the standing plate portion 32 extending radially inward from an outer end in the width direction of the outer cylindrical portion 31, and an inner cylindrical portion 33 extending from the inner diameter end 32a of the standing plate portion 32 toward an inner side of the bearing. The inner cylindrical portion 33 of the standing plate portion 32 has a tip that faces, in an axle direction (left-right direction in Fig. 5), the side wall surface 26b between the outer diameter portion 25 and the small-diameter step portion 26 of the inner ring 23.

Therefore, the outer seal member 30A formed to have the U-shaped cross section has a simple and compact shape in which the standing plate portion 32 extending radially inward from the outer end in the width direction of the outer cylindrical portion 31 attached to an inner peripheral surface of the inner diameter portion 21b of the outer ring 21 does not protrude from an outer ring end surface of the outer ring 21.

An elastic body 35A is integrally provided and fixed to the inner diameter end 32a of the standing plate portion 32 and the inner cylindrical portion 33 in the outer seal member 30A. The elastic body 35A forms the inner diameter portion of the outer seal member 30A together with the inner cylindrical portion 33.

The elastic body 35A made of an elastic sealing material such as rubber or elastomer integrally includes the first lip 36 and the second lip 37 serving as lip portions that are in slidable contact with the inner seal member 40 fixed to the small-diameter step portion 26, and the third lip 38 and the fourth lip 39.

Further, as illustrated in Fig. 5, the double row tapered roller bearing 20A according to the second embodiment is configured such that the axial relative distance L1 between the outer surface 24a of the cage 24 that rotatably holds the plurality of tapered rollers 22 and the standing plate portion 32 of the outer seal member 30A is larger than the axial relative distance L2 between the side wall surface 26b, which is between the outer diameter portion 25 and the small-diameter step portion 26 of the inner ring 23, and the standing plate portion 32 of the outer seal member 30A.

In this way, according to the double row tapered roller bearing 20A according to the second embodiment, similarly to the double row tapered roller bearing 20 according to the first embodiment, when disassembling the sealing device 29A, the side wall surface 26b of the inner ring 23, which is moved in the axial direction with respect to the outer ring 21, presses the inner cylindrical portion 33 of the outer seal member 30A, so that the outer seal member 30A can be separated from the outer ring 21. That is, by adopting a structure in which the inner ring 23 directly presses the outer seal member 30A of the sealing device 29A, disassembly of the sealing device 29A can be improved. As a result, maintainability of the double row tapered roller bearing 20A is improved.

Further, the outer seal member 30A constituting the sealing device 29A according to the second embodiment may be configured to have a simple shape having the same circumferential cross section. Further, as compared with the structure in the related art, the sealing device 29A of the double row tapered roller bearing 20A has a simple and compact shape, making it possible to reduce space required for a housing that fixes the outer ring 21 and to omit a component constituting the sealing device 29. Therefore, the weight of the bearing unit for railway vehicle 10A can be reduced.

In addition, the outer seal member 30A according to the second embodiment has a U-shaped cross section in which the inner diameter portion extends toward the inside of the bearing, and defines a space 15 for a grease reservoir that is wide in the axial direction toward the inner side of the bearing. Therefore, lubricity of the double row tapered roller bearing 20A is easily maintained, and contribution to prevention of grease leakage can be expected.

Since the axle bearing for railway vehicle is used in a vibration environment, it is necessary to sufficiently secure a fitting margin between the outer seal member 30A and the outer ring 21. Therefore, annular rigidity of the outer seal member 30A that is in contact with the side wall surface 26b of the inner ring 23 is important.

The above-described outer seal member 30A according to the second embodiment described has the U-shaped cross section in which the inner diameter portion extends toward the inner side of the bearing, and has higher annular rigidity than the outer seal member 30 having the L-shaped cross section according to the first embodiment described above. Therefore, the outer seal member 30A is less likely to be deformed by a force applied by the side wall surface 26b of the inner ring 23, and an appropriate disassembly work is facilitated.

As described above, according to the double row tapered roller bearing 20A according to the second embodiment, it is possible to improve reliability, extend service life, improve maintainability, reduce weight, and reduce space.

The present invention is not limited to the above-described embodiments, and can be appropriately modified, improved, or the like. Further, a material, a shape, a size, the number of, an arrangement position, and the like of each component in the above-described embodiments can be freely set and are not limited as long as the present invention can be achieved.

For example, in the present embodiment, the double row tapered roller bearings 20, 20A are applied as the axle bearing for railway vehicle, but the present invention is not limited thereto, and other types of rolling bearings may be applied.

Further, in the above-described embodiment, the elastic body 35 (35A) facing the outer periphery of the small-diameter step portion 26 of the inner ring 23 includes the first lip 36 and the second lip 37 that are in slidable contact with the inner sleeve 41 of the inner seal member 40. The elastic body according to the present invention is not limited thereto, and may be an elastic body forming a labyrinth seal in which a lip portion facing an outer periphery of the small-diameter step portion is not in contact with a small-diameter step portion or an outer periphery of an inner seal member.

Here, features of the embodiments of the axle bearing for railway vehicle according to the present invention described above will be briefly summarized and listed in the following [1] to [5].
[1] An axle bearing for railway vehicle (double row tapered roller bearing (20, 20A) including an outer ring (21), an inner ring (23), and a plurality of rolling elements (tapered rollers 22) rollably arranged between the outer ring (21) and the inner ring (23), and rotatably supporting an axle (50) having an end to which a wheel of a railway vehicle is attached, the axle bearing for railway vehicle (double row tapered roller bearings (20, 20A) including:
   an outer seal member (30, 30A) including an outer cylindrical portion (31) attached to an inner diameter portion (21b) of the outer ring (21) and a standing plate portion (32) extending radially inward from an outer end in a width direction of the outer cylindrical portion (31);
   a multi-stage small-diameter step portion (26) formed on an outer diameter portion (25) of the inner ring (23) adjacent to an inner diameter end (32a) of the standing plate portion (32); and
   an elastic body (35, 35A) fixed to the inner diameter end (32a) of the standing plate portion (32) and facing an outer periphery of the small-diameter step portion (26), in which
   the inner diameter end (32a) of the standing plate portion (32) adjacent to the outer periphery of the small-diameter step portion (26) faces, in an axle direction, a side wall surface (26b) between the outer diameter portion (25) and the small-diameter step portion (26) of the inner ring (23).

According to the above-described configuration [1], when disassembling the outer seal member (30, 30A), the side wall surface (26b) of the inner ring (23), which is moved in the axial direction with respect to the outer ring (21), presses the inner diameter end (32a) of the outer seal member (30, 30A), so that the outer seal member (30, 30A) can be separated from the outer ring (21). That is, by adopting a structure in which the inner ring (23) directly presses the outer seal member (30, 30A), the disassembly of the sealing device can be improved. As a result, the maintainability of the axle bearing for railway vehicle (double row tapered roller bearings 20, 20A) is improved.

Further, the outer seal member (30, 30A) and the inner ring (23) may be configured to have simple shapes having the same circumferential cross section. In addition, as compared with the structure in the related art, the sealing device has a simple and compact shape, making it possible to reduce space required for a housing that fixes the outer ring (21) and to omit a component constituting the sealing device, thereby making it possible to reduce the weight of the bearing unit for railway vehicle.

[2] The axle bearing for railway vehicle (double row tapered roller bearings 20, 20A) according to [1], in which
an axial relative distance (L1) between a cage (24) that rotatably holds the plurality of rolling elements (tapered rollers 22) and the outer seal member (30, 30A) is larger than an axial relative distance (L2) between the side wall surface (26b), which is between the outer diameter portion (25) and the small-diameter step portion (26) of the inner ring (23), and the outer seal member (30, 30A).

According to the above-described configuration [2], when the inner ring (23) is moved in the axial direction with respect to the outer ring (21), the outer seal member (30, 30A) does not come into contact with the cage (24) inside the bearing before the side wall surface (26b) of the inner ring 23 comes into contact with the cage (24) inside the bearing. Therefore, there is no concern that the cage (24) is damaged or deformed, and thus making it impossible to continue using the double row tapered roller bearing (20, 20A).

[3] The axle bearing for railway vehicle (double row tapered roller bearings 20, 20A) according to [1] or [2], in which
an inner seal member (40) with which the elastic body (35, 35A) is capable of coming into slidable contact is provided on the outer peripheral surface (26a) of the small-diameter step portion (26).

According to the above-described configuration [3], the outer peripheral surface (26a) of the small-diameter step portion (26) is prevented from being worn by the elastic body (35, 35A) coming into slidable contact with the inner seal member (40), and when a sealing function deteriorates, initial sealing performance can be restored by replacing only the inner seal member (40).

[4] The axle bearing for railway vehicle (double row tapered roller bearing 20A) according to [3], in which
the outer seal member (30A) is formed in a U-shaped cross section including an inner cylindrical portion (33) extending from the inner diameter end (32a) of the standing plate portion (32) toward an inner side of the bearing.

According to the above-described configuration [4], the outer seal member (30A) has higher annular rigidity, and is less likely to be deformed by a force applied by the side wall surface (26b) of the inner ring (23), and an appropriate disassembly work is facilitated.

[5] The axle bearing for railway vehicle (double row tapered roller bearings 20, 20A) according to any one of [1] to [4], in which
the outer ring (21) is made of high carbon chromium bearing steel, and
the inner ring (23) is made of carburized bearing steel.

According to the above-described configuration (5), since the outer ring (21) is made of the high carbon chromium bearing steel that is a material having a high degree of cleanliness, it is possible to obtain a high effect of preventing occurrence of internally initiated flaking. In addition, the inner ring (23) is made of the carburized bearing steel, and compressive stress is generated in a surface layer portion of the carburized bearing steel by carburizing heat treatment. Therefore, by using the carburized bearing steel having the compressive stress in the radial direction of the axle 50 as the material of the inner ring (23), it is possible to set a high allowable value of the interference.

In this way, according to the axle bearing for railway vehicle (double row tapered roller bearings 20, 20A) having the above-described configuration of [5], it is possible to prevent the flaking inside the bearing and to obtain high reliability over a long period of time.

The present application is based on a Japanese patent application (No. 2023-065069) filed on April 12, 2023, contents of which are incorporated herein by reference.

### INDUSTRIAL APPLICABILITY

The axle bearing for railway vehicle according to the present invention can sufficiently meet future needs of improving maintainability, reducing weight, and reducing space while having a bearing function in the related art.

### REFERENCE SIGNS LIST

10: bearing unit for railway vehicle
20: double row tapered roller bearing (axle bearing for railway vehicle)
21: outer ring
21b: inner diameter portion
22: tapered roller (rolling element)
23: inner ring
25: outer diameter portion
26: small-diameter step portion
26b: side wall surface
29: sealing device
30: outer seal member
31: outer cylindrical portion
32: standing plate portion
32a: inner diameter end
50: axle

## Claims

1. An axle bearing for railway vehicle comprising an outer ring, an inner ring, and a plurality of rolling elements rollably arranged between the outer ring and the inner ring, and rotatably supporting an axle having an end to which a wheel of a railway vehicle is attached, the axle bearing for railway vehicle comprising:
an outer seal member including an outer cylindrical portion attached to an inner diameter portion of the outer ring and a standing plate portion extending radially inward from an outer end in a width direction of the outer cylindrical portion;
a multi-stage small-diameter step portion formed on an outer diameter portion of the inner ring adjacent to an inner diameter end of the standing plate portion; and
an elastic body fixed to the inner diameter end of the standing plate portion and facing an outer periphery of the small-diameter step portion, wherein
the inner diameter end of the standing plate portion adjacent to the outer periphery of the small-diameter step portion faces, in an axle direction, a side wall surface between the outer diameter portion and the small-diameter step portion of the inner ring.

2. The axle bearing for railway vehicle according to claim 1, wherein
an axial relative distance between a cage that rotatably holds the plurality of rolling elements and the outer seal member is larger than an axial relative distance between the side wall surface, which is between the outer diameter portion and the small-diameter step portion of the inner ring, and the outer seal member.

3. The axle bearing for railway vehicle according to claim 1 or 2, wherein
an inner seal member with which the elastic body is capable of coming into slidable contact is provided on the outer peripheral surface of the small-diameter step portion.

4. The axle bearing for railway vehicle according to claim 3, wherein
the outer seal member is formed in a U-shaped cross section including an inner cylindrical portion extending from the inner diameter end of the standing plate portion toward an inner side of the bearing.

5. The axle bearing for railway vehicle according to any one of claims 1 to 4, wherein
the outer ring is made of high carbon chromium bearing steel, and
the inner ring is made of carburized bearing steel.
